# EUROPEAN PATENT APPLICATION

(11) **EP 4 723 029 A1**
(43) Date of publication of application: **08.04.2026**
(21) Application number: 24204662.1
(22) Date of filing: 04.10.2024
(51) Int. Cl.: G06T 5/50

(54) **MICROSCOPE SYSTEM FOR IMAGING SAMPLE IN FLOW**

(71) Applicant: Viventis Microscopy Sàrl, 1015 Lausanne (CH)
(72) Inventor: Strnad, Petr, 1015 Lausanne (CH); Migliozzi, Daniel, 1015 Lausanne (CH); Boni, Andrea, 1015 Lausanne (CH)
(74) Representative: Schaumburg und Partner Patentanwälte mbB

(57) **Abstract**

A method for imaging flow cytometry and corresponding imaging system (100, 200) are provided. The method comprises the step of moving a sample (116) along an axis of movement (118). The method further comprises the step of generating recorded images (300, 400) of the sample (116). Each recorded image (300, 400) is generated by illuminating the sample (116) by illumination light (106), forming an image of the sample (116) by collecting detection light (104) originating from the sample (116), and recording the recorded image (300, 400) of the sample (116) during its movement. The method further comprises the step of generating a combined image (308, 408, 502, 706) of the sample (116). The combined image (308, 408, 502, 706) of the sample (116) is generated by selecting at least two recorded images (300, 400). For each selected recorded image, a transformed recorded image (304, 404, 500) is generated by extracting at least a part of the selected recorded image, and a transformation is applied to the extracted part of the selected recorded image. The transformed extracted parts are combined into the combined image (308, 408, 502, 706).

## Description

### Technical Field

The present invention relates to a microscope for imaging a sample in flow.

### Background Art

Imaging flow cytometry is a method for imaging biological objects (typically single cells, cell aggregates, organoids, model organisms or other objects) when they move in a flow. The advantage of this method compared to traditional flow cytometry is that an image of the sample is recorded, instead of just a single intensity value per sample. This enables more information about the sample to be collected relative to traditional flow cytometry, while keeping a higher throughput relative to standard microscope methods. However, because of the movement of objects induced by the flow, images are distorted by motion blur, which decreases the spatial resolution of the image. This blur increases when increasing the flow speed or the exposure of the sensor used to record the image.

Patent US 6,249,341 B1 reports a method using Time-Delay Integration on a pixelated camera to compensate the sample motion by transfer-and-accumulation of the signal within the camera pixels line-by-line, and by reading the intensity at the end of the transfer. However, since this method requires accurate synchronization of the transfer speed with the flow speed, it is sensitive to fluctuations of the flow speed, requiring an accurate measurement of the flow. Moreover, since this motion compensation is implemented in hardware, if the synchronization is not accurate enough and the compensation is wrongly performed during the time the sample spends in the imaging region, the image will be blurred and there will be no possibility to recover the original signal of the sample. Finally, it is not possible to generate 3D volumes of the samples since only a single slice is generated during the imaging.

Mikami et al. (2020) describe a method using a rotating polygon mirror in combination with a scanning light-sheet to change the path of the light originating from the moving objects in such a way that motion is compensated by redirecting the image at a specific and stationary location on a pixelated camera. Like the previous method, accurate synchronization of the rotation speed of the polygon mirror with the flow speed makes this method sensitive to flow fluctuations. Moreover, since this compensation is implemented in hardware, there is no possibility to recover the original signal of the sample if the synchronization is not accurate during the time the sample spends in the imaging region. Moreover, since the readout time of the system reported takes half of the duty cycle of the acquisition, the system records images of the objects during only half of the time of the acquisition duty cycle. This results in suboptimal acquisition and even in potentially missing samples that pass through the imaging region in the half-cycle during which the system is not recording. Finally, it is not possible to generate 3D volumes of the sample since only a single slice is generated during the imaging.

Ugawa et al. (2022) propose a method using a time-gated light-sheet illumination to image several sections of the sample at different locations of a pixelated sensor during a single exposure, and then combining them back after image acquisition. Since more images of the same moving sample need to be recorded within a single exposure, the effective field-of-view is reduced along the direction of the flow, which limits the possibility to image large objects. Furthermore, since the illumination is time-gated (stroboscopic) to eliminate motion-blur, the duty cycle of illumination and thus light efficiency of the system is extremely low, especially for higher flow speeds. Moreover, since such time-gating needs to be adapted to the size of the sample to ensure that there is no overlap between subsequent sections of it, the optical sectioning intrinsically decreases when increasing the size of the sample. Also, parameters of the volumetric imaging such as plane distance and depth of field are defined by the hardware and are fixed at the acquisition time. This prevents easy adaptation of the volumetric imaging based on a sample.

Gorthi et al. (2013) report a method using temporally coded illumination to retrieve the spatial information of the sample during its motion while exposing a pixelated sensor. The system is based on the quick rotation of a designed chopper-wheel which modulates the excitation light. The image recorded by the sensor is then processed to restore the original spatial information. Since the illumination is time-gated and therefore the information of the sample is not acquired entirely when the sample is in the field-of-view of the sensor, the acquisition is suboptimal, and the illumination light is used inefficiently. In addition, a relatively complex processing algorithm is needed to restore the original images of the sample. This computational step requires input images with higher signal to noise to achieve good image quality in the reconstructed image compared to direct acquisition of the sample image without need for reconstruction. Finally, it is not possible to generate 3D volumes of the sample since only a single slice is generated during the imaging.

### Summary

Therefore, there is a need for a system capable of imaging moving objects - preferably at high speed - with high spatial resolution, in a way that is light-efficient on both the illumination and detection side. Advantageously, the system should also be flexible and robust towards fluctuations of the flow speed or unprecise measurements of the flow speed. Optionally, it should also be capable of generating volumetric images of the sample.

The aforementioned objective is achieved by the subject-matter of the independent claims. Advantageous embodiments are defined in the dependent claims and the following description.

In a first aspect, a method is provided for imaging flow cytometry. The method comprises the step of moving a sample along an axis of movement, in particular by a flow. In particular, the sample is moved along a single axis of movement. The method further comprises the step of generating recorded images of the sample, in particular at least two recorded images. Each recorded image is generated by illuminating the sample by illumination light, forming an image of the sample by collecting detection light originating from or interacting with the sample, and generating recorded images of the sample by recording images of the sample during its movement. The method further comprises the step of generating a combined image of the sample. The combined image of the sample is generated by selecting at least two, in particular all, recorded images. For each selected recorded image, a transformed recorded image is generated by extracting at least part of the selected recorded image or by extracting the entire selected recorded image, and by applying a transformation to the extracted part or the entire selected recorded image. The transformed extracted parts, in particular all transformed extracted parts, or the recorded transformed images are combined into the combined image.

When a part of a selected recorded image is extracted, in particular only a part of the pixels of the respective image is considered in any further step. Preferably, the extracted part may include the image of the sample or a part of the image of the sample. Alternatively, the entire recorded image can be extracted for the generation of the transformed recorded image from each of the selected recorded images.

The sample is a microscopic sample, in particular. For example, the sample may be a single cell or a cell cluster, organoid, model organism or other objects. The cell may optionally be stained, for example with fluorescent markers, prior to carrying out the method.

Preferably, the steps of the method are carried out in the order as they are listed above or in claim 1.

Preferably, the method comprises an initial step of providing at least a fluidic arrangement in combination with an imaging system. The fluidic arrangement may be configured to move the sample along the axis of movement. In particular, the fluidic arrangement may include a fluidic channel, for example as part of a microfluidic device, which is configured to move the sample in a fluid, in particular a liquid, through the fluidic channel and along the axis of movement. Preferably, the fluidic arrangement is configured to constantly move the sample along the axis of movement. Thus, the sample may be moved along the axis of movement in a uniform direction and uniform magnitude of velocity, in particular. In other words, the movement or motion of the sample is preferably linear and uniform.

Preferably, the recorded images may be generated by means of the provided imaging system. In particular, the imaging system may additionally comprise an illumination light source configured to generate illumination light, a detector array configured to receive detection light, an optical arrangement configured to direct the detection light from the sample towards the detector array and to direct the illumination light towards the sample. The imaging system might comprise a control unit configured to control the imaging system.

A focal plane of the imaging system is preferably arranged in an imaging space of the fluidic channel. The axis of movement may intersect the focal plane in the imaging space of the fluidic channel. Thus, the imaging system may generate images of the samples whilst the sample flows through the fluidic arrangement. In particular, the focal plane of the imaging system is substantially fixed in space and the sample moves relative to the focal plane. In particular, the imaging system is arranged such that the movement of the sample results in a movement of the image in an image plane.

The sample may be illuminated for the duration of an illumination time, for example, by means of the illumination light source of the imaging system. Preferably, the illumination light source and/or the optical arrangement is configured to generate an illumination light sheet, in particular, for the duration of the illumination time. Sample illumination may be in transmission, reflection, brightfield, darkfield, epi-fluorescent or light-sheet mode, for example.

The recorded image of the sample may be generated by recording detection light originating from or interacting with the sample for the duration of a recording time, for example, by means of the detector array of the imaging system. In particular, the movement of the sample through the focal plane results in a movement of the image across the detector array. In particular, the detector array may be a two-dimensional detector array. The detector array may preferably comprise individual detector elements, such as photodiodes, that are arranged as a two-dimensional array and are referred to as the pixels of the detector. In particular, each of the individual detector elements is configured to generate a signal in response to incident detection light. In a specific example, the detector elements may be single-photon avalanche diodes (SPADs), and the detector array may be a SPAD array.

In particular embodiments, the imaging system has a focal plane and is arranged to collect light originating from or interacting with a sample and to form an image of the sample such that the motion of the sample results in motion of the image of the sample. It is understood that the focal plane may be curved depending on the features of the imaging system (such as objectives, lenses, elements to engineer the point-spread-function).

The sample is in relative motion with respect to the focal plane and this motion has a preferential direction along an axis. This directed motion enables many samples to be moved through the imaging system for high throughput imaging. The system preferably does not include hardware which would compensate for the motion of the sample, or the motion compensation hardware does not fully compensate for it, thus, the sample motion results in motion of the image of the sample with respect to the pixels of the detector array. This motion of the image of the sample with respect to the pixels of the detector array then also has a preferential direction along an axis. The detector then records images of the sample throughout the sample's motion. Such images are recorded over time and, especially when recorded at high speed (which may be necessary to eliminate motion blur), the signal of the sample on such images may be low. This makes it very difficult, or even impossible, to use such recorded images as they are, for the investigation of the sample. The method combines (extracted parts of) selected recorded images to generate combined images of the sample, which will be usable for investigation of the sample. It is understood that an extracted part of an image may be the whole image.

Preferably, the extracted part is a stripe of the recorded image, where the stripe might be oriented orthogonally to the direction of the axis of movement of the sample in the recorded image. Alternatively, the extracted part is a stripe of the recorded image, where the stripe might be oriented parallelly to the direction of the axis of movement of the sample in the recorded image.

Since the image of the sample is in motion with respect to the pixels of the detector, a simple summation or averaging of the recorded images would result in an image blurred by this motion. Such a blur is highly undesirable since it degrades the resolution of the image and makes it difficult, or even impossible, to investigate details of the imaged sample. Thus, the images recorded by the detector array are transformed before combining them to remove or reduce this blurring. The method combines multiple recorded images by applying a transformation to extracted parts of such multiple recorded images and only subsequently by combining them into a combined image.

Depending on the detector, the recorded images may have different formats. For example, frame-based detectors report information from all the pixels of the sensor at regular time intervals. Conversely, event-based detectors report information only from pixels where particular events occur. This feature is interesting for increasing speed or compressing data. An example of such events is that a photon was detected. Another example of such events is that a difference in photon flux relative to the previously reported photon flux was detected. It is thus understood that the recorded image of the sample at a particular time may be considered as the image obtained by retrieving the value of each pixel based on the information reported by the detector for each pixel over time.

Preferably, the transformation applied to an extracted part includes a translation along a direction of the image of the axis of movement of the sample in the recorded image. In other words, the transformation applied to an extracted part includes a translation along an axis, which is an image of the axis of movement of the sample. Thus, the translation may be in a direction of the axis of movement when it is imaged onto the detector array.

Since the relative motion of the image of the sample with respect to the pixels of the detector array has a preferential direction along an axis, to compensate for this motion the transformation applied to an individual recorded image may advantageously be a translation along such axis. Further advantageously, this translation should be in a direction opposite to the movement of the image of the sample in the recorded image.

To compensate or mitigate for the relative motion of the image of the sample with respect to the pixels of the detector, each recorded image should be translated by a different translation which depends on the translation of the image of the sample from the first recorded image included in the combination to the recorded image being transformed. In some configurations, for instance, one may be able to retrieve this translation by cross-correlating recorded images or by making assumptions about the motion of the image of the sample with respect to the pixels of the detector. This way, multiple recorded images can be transformed such that the pixels containing the image of the sample in such recorded images correspond to the same pixel in the transformed images. This enables mitigation or compensation of the motion of the image of the sample on the detector.

Preferably, the transformation applied to the extracted part of a particular one of the selected recorded images includes a translation substantially opposite to the displacement of the image of the sample from the first selected recorded image to the particular one of the selected recorded images.

If the transformation applied to the extracted part of a particular one of the selected recorded images includes a translation substantially opposite to the displacement of the image of the sample from the first selected recorded image to the particular one of the selected recorded images the combined image represents a view of the sample along an axis perpendicular to the focal plane of the imaging system. It would be desirable to obtain a view of the sample along a new axis which is non-perpendicular to the focal plane of the imaging system. This may be done, for instance, by multiplying the translation by a factor related to the angle between the new axis and the focal plane. The transformation in this case may be a translation in substantially opposite direction and with a magnitude being proportional to the displacement of the image of the sample from the first selected recorded image to the particular one of the selected recorded images. It is thus understood that in this case the motion is compensated along a plane which is tilted relative to the focal plane of the imaging system.

A plane perpendicular to the axis of view is referred to as the plane of the view of the sample.

In some cases, pixel binning may be used to reduce the size of the image or increase dynamic range or signal-to-noise ratio. It is thus intended that pixel binning may optionally be included in the transformation applied to the extracted parts or in the combination of the transformed recorded images.

Preferably, combining the transformed recorded images includes generating a weighted sum of the transformed recorded images.

Because images may be recorded at high speed, the signal of the sample on recorded images may be low. This makes it very difficult, or even impossible, to use such recorded images as they are for the investigation of the sample. To use information from multiple recorded images, which have been already transformed, such transformed recorded images are combined, for example, by operations including a weighted summation. Such an operation can for example be summing or averaging.

Depending on the operating mode of the detector array, combining may make the combined image have a higher dynamic range compared to the recorded images. Specifically, if the detector array operates such that its detection noise in the recorded image is negligeable relative to the detected signal in the individual recorded images, combining the transformed images may create a combined image with a higher dynamic range than the recorded images.

Depending on the operating mode of the detector array, combining may make the combined image have a higher signal-to-noise ratio compared to the recorded images. Specifically, if the detector operates such that its detection noise is not negligeable with respect to the detected signal in the individual recorded images, combining the transformed images may create a combined image with a higher signal-to-noise ratio than the recorded images.

Depending on the amount of signal in the recorded images, it may be advantageous to have a number of recorded images that are generated that is at least 10, or more preferably, at least 20, 50 or 100. This enables the generation of combined images of high quality.

Combining more images may be advantageous when individual recorded images have low bit depth, since this may achieve higher dynamic range in the combined images, and thus resulting in image quality sufficient for investigation of the sample. Thus, for example, for images with bit depth lower than 3 bits, at least 5 images need to be combined, for images with bit depth lower than 2 bits, at least 10 images need to be combined.

Preferably, and in particular when at least three selected recorded images are used for generating a combined image, the transformation applied to the extracted part of a particular one of the selected recorded images includes a translation with a magnitude substantially proportional, with a coefficient of proportionality S, to the time elapsed between generation of the first selected recorded image and generation of the particular one of the selected recorded images.

In some configurations, for instance when recorded images have a low dynamic range or low signal-to-noise ratio, it may not be possible to retrieve the magnitude of the translation from a small number of recorded images. This problem can be overcome when the recorded images are recorded within a time span during which the speed of motion of the imaged sample can be assumed to be substantially constant. The transformations will then consist of translations that assume constant speed over time. At least three images are preferably combined with a translation with magnitude substantially proportional, with a coefficient of proportionality S that might represent the speed, on the time elapsed between acquisition of a first recorded image and the recorded image being transformed. This is very useful not only when the motion speed is truly constant during the entire investigation of the sample, but also when the number of recorded images to be combined have been recorded in a sufficiently short time such that the motion speed can be assumed constant.

Combining more than two images, preferably more than 5 or 10, may be advantageous for images with low bit depth. In that case, the assumption of sufficiently constant speed of movement of the sample during the generation of the recorded images used for generating the combined image when using a coefficient of proportionality S is particularly important.

When the speed of movement of the sample is not known with certainty or when it varies over time, it can be advantageous to compute it from the images recorded by the detector. One can do it by choosing multiple estimates for the speed. Then, for each estimate of the speed, one can apply a sequence of translations to images recorded by the detector, where each translation assumes constant speed over time with magnitude equal to the speed estimate. Then, one can compute a score based on a property of such transformed recorded images. Such a score indicates the quality of the speed estimate. Finally, the speed can be computed from the speed estimates and their corresponding scores. This makes the combination procedure robust to speed variations over time.

Preferably, the coefficient of proportionality S is computed by generating at least two estimates of the coefficient of proportionality S, and computing a score for each estimate. The score for each estimate is computed by selecting at least two recorded images, preferably at least three, more preferably, at least 5 or 10, and generating a transformed recorded image for each selected recorded image. For each estimate, different recorded images and/or a different number of recorded images may be considered. The recorded images considered for each estimate do not have to be identical to the ones for the combined image. The transformed recorded image for each selected recorded image is generated by extracting at least a part of a particular one of the selected recorded images, and by applying a transformation to the extracted part. The transformation includes a translation with magnitude substantially proportional, with coefficient of proportionality equal to the estimate, to the time elapsed between generation of a previous, in particular the first, selected recorded image and generation of the particular one of the selected recorded images. Further, the score for each estimate is computed based on a property of the transformed recorded images. Further, the coefficient of proportionality S is computed based on the scores of the estimates.

An example of a score can be the pixel-by-pixel correlation of the transformed recorded images, in particular, since the movement of the sample is well compensated, their overlap is high and the pixel values correlate. Another example is the sharpness of a combined image that is generated by using that estimate, since the sharper the combined image, the less blur it contains. Another example is the similarity of the statistics of the pixel values of the transformed images with a physics-based statistical distribution that matches the photon arrival statistics of the detector, since such statistical distribution may be estimated with a physical model.

Preferably, the step of computing the coefficient of proportionality S includes generating a weighted average of the estimates of the coefficient of proportionality S, and wherein the weighing of each estimate is based on the scores.

Since the estimates give an indication of the value of the speed of the movement of the sample, the speed may advantageously be computed based on a weighted average of the estimates wherein each estimate is weighted based on the computed scores.

For example, since the higher the computed score the higher the accuracy of the speed estimate, one can advantageously set all weights of the slope estimates to zero except the one of the speed estimates with the highest computed score, which is set to one. This basically computes the motion speed as being the speed estimate with the highest score. Alternatively, for instance, one can set all the weights of the weighted average to zero except the ones of the three speed estimates with the highest computed scores, which are set to one third. This basically computes the motion speed as the average of the three speed estimates with the highest scores. Alternatively, for instance, one can set the weight of each estimate to the value of the corresponding computed score divided by the sum of all the computed scores. This basically selects the mean of the speed estimates weighting each speed estimate with its normalized score.

Preferably, the step of computing the coefficient of proportionality S may include fitting a function to the values of the scores and the values of the estimates.

Since the values of the pixels of the images recorded by the detector depends on the statistical distribution of the photons detected by the detector array, the score may advantageously also be computed based on a property of the statistical distribution of the values of the pixels of the transformed recorded images.

Since the statistical distribution of the photons detected by the detector can be known a priori (e.g., Poisson distribution, Bernoulli distribution, Binomial distribution, Poisson-Binomial distribution), the score may advantageously be computed based on the similarity of the statistical distribution of the values of the pixels of the transformed recorded images with a specific statistical distribution. For instance, the distribution of the values of the pixels of the transformed recorded images can be fitted with a specific statistical distribution, and the quality of the fit can be used as a score.

Alternatively, a function is fitted to the values of the scores and of the speed estimates, and an optimal speed is computed based on the fitted function. For example, such function can be a peaked function in cases where the scores peak around the correct speed: the optimal speed would then be the mode of the fitted function. Instead of score values one can use score values transformed by a function, for example a function which subtracts a constant which may correspond to a background, or a function calculating a square, or other functions. This may be considered equivalent to using the original values of scores.

When the motion is intended to be compensated along a plane which is tilted relative to the focal plane of the imaging system, computing the coefficient of proportionality S based on the scores of the estimates of the coefficient of proportionality may conveniently include the multiplication by the factor related to the angle between the new plane and the focal plane. This may be conveniently applied to the estimates of the coefficient of proportionality or to the computation of the coefficient of proportionality S based on the scores of the estimates of the coefficient of proportionality S.

It may be advantageous to exploit this constant motion and combine at least 5, or 10 images (or any number of images in between) assuming a constant speed. This may be particularly important when working with recorded images having low dynamic range or low signal-to-noise ratio as it may often be the case for short recording or illumination times, which are needed to eliminate or decrease the motion blur on individual recorded images.

The combination of recorded images may optionally be run with different transformations on different parts of such recorded images. For instance, the size of the translation used for compensating the motion of the sample can be different for different parts of the recorded images. This enables, for instance, the compensation of the motion of different objects that are imaged in the same series of recorded images but in different regions of the image, where they might have different speeds of movement on such a series of recorded images. Thus, all processing described can be run on a part of the recorded image. It can also be run in parallel for several parts of the same recorded image while using different parameters such as the coefficient of proportionality S for each part.

Preferably, the imaging system is arranged such that the angle between the focal plane and the axis of movement is larger than 0 degrees, preferably larger than 5 or 10 degrees and/or smaller than 90 degrees, preferably smaller than 80 or 70 degrees.

In configuration where the angle between the focal plane and the axis of movement of the sample is 90 degrees there may be no motion blur in the image of the sample on the detector array. This method is therefore particularly applicable in configurations where the angle between the focal plane and the axis of movement of the sample is smaller than 90 degrees. Because of the mechanical constraints and the need to mechanically fit large objectives with higher numerical aperture, angles smaller than 80, in particular 70 degrees are beneficial. Configurations with the angle between the focal plane and the axis of movement of the sample of 90 degrees is difficult to realize when using microfluidic channels because of complex channel fabrication and consequent negative effect on the flow direction and speed. Thus, angles smaller than 90 degrees enabled by this method are technically beneficial.

In some configurations, the sample may move parallel to the focal plane of the imaging system. This way, essentially the same section of the sample is imaged on each recorded image, thus enabling two-dimensional imaging of such a section of the sample. This configuration enables exposure of the same section of the sample during the whole time it spends in the field-of-view of the imaging system. This improves the quality of the imaging and may be used, for instance, to image single cells or particles which are small enough to be imaged essentially in their entire volume when moving through the field-of-view or focal plane of the imaging system. Such objects may typically be smaller than or equal to the detection depth or depth-of-field of the imaging system, or samples where single plane image is sufficient for the intended investigation of the sample.

Several imaging modalities are compatible with the described method. It is possible to change the imaging modality of the imaging system while the sample moves during the time it spends in the field-of-view of the imaging system, in particular in a time sequential manner and while doing so, record generated images of the sample. Such imaging modalities include for example transmission, reflection, brightfield, darkfield, epi-fluorescent or light-sheet mode, for example. By these means, more information might be generated from the sample, in particular if the sample is specifically stained with one or more fluorochromes.

In some configurations, the sample may move obliquely to the focal plane of the imaging system, which means that the angle between the focal plane and the axis of movement is larger than 0 degrees, e.g. the angle might be about 5 degrees to 20 degrees. This way, different sections of the sample are imaged on the recorded images during the time it spends in the field-of-view of the imaging system, thus enabling three-dimensional imaging of the volume of the sample. This configuration enables large objects to be imaged and may be used, for instance, to image objects which are larger than the detection depth or depth-of-field of the imaging system. These objects are typically cells, organoids, or model organisms. The larger the sample, the larger the angle needed to image its entire volume during its movement within the field-of-view. For example, single cells of 15µm may be images with angle of larger than 5 degrees but objects larger than 50µm may need angle larger than 10 degrees. It is possible in this embodiment as well that the imaging modality of the imaging system is changed as well while the sample moves during the time it spends in the field-of-view of the imaging system, in particular in a time sequential manner.

To be able to image an entire volume of large objects it is advantageous to have a large angle between the focal plane and the axis of movement, for example larger than 5 degrees or larger than 10 degrees.

Optionally, when the sample moves obliquely to the focal plane of the objective, the number of recorded images used to generate a combined image may be adjusted to be larger than the number of images recorded during the time an infinitely small object spends within the depth-of-field of the objective during its movement. Thus, since different recorded images provide in-focus information on different sections of the sample, combining a large enough number of recorded images digitally extends the section of the sample which is in-focus in a combined image. Such a combined image is thus referred to as an extended-depth-of-field image, which enables, for instance, to include more in-focus information about the sample in the same combined image, thus reducing the size of the data to transfer or to analyse.

Optionally, when the sample moves obliquely to the focal plane of the imaging system, the number of recorded images used to generate a combined image may be adjusted to be larger than the number of images recorded during the time an object spends within the depth-of-field of the imaging system during its motion. This way, the entire object is in focus in the combined image. Such a combined image is thus referred to as an integrated-intensity image, which enables, for instance, to include the whole information about the object volume in the same combined image, thus reducing the size of the data to transfer or to analyse.

Preferably, the step of generating a combined image of the sample is executed at least twice, wherein each combined image is generated by extracting different parts of the selected recorded images. The at least two combined images that are generated may therefore be based on different parts of the selected recorded images.

This is specifically beneficial when the angle between the focal plane and the axis of movement of the sample is larger than 0 degrees, in which case, extracting different stripes perpendicular to the image of the axis of movement of the sample will generate different combined images, each corresponding to a different section of the sample.

Preferably, the step of generating a combined image of the sample is executed at least twice, wherein each combined image is generated by selecting a different set of the recorded images. Each of the at least two combined images that are generated may therefore be based on a different set. A set of the recorded images may comprise at least two recorded images. Preferably, each set differs from another set by at least one image. In particular, each set may comprise sequentially recorded images.

This is specifically beneficial when the angle between the focal plane and the axis of movement of the sample is larger than 0 degrees, in which case, using different sets of sequentially recorded images will generate different combined images, each corresponding to a different section of the sample. For some types of samples as described above it is beneficial to generate images corresponding to different sections of the sample, in which case it is preferable to have the angle between the focal plane and the axis of movement of the sample to be larger than 5 degrees or 10 degrees.

Preferably, the method comprising a step of further combining combined images into a further combined image. This may be carried out by generating a transformed combined image for each combined image by applying a transformation to each combined image. The transformed combined images may then be combined into a further combined image. Preferably, the transformation applied to a particular combined image includes a translation substantially opposite to the translation of the image of the sample from the first selected combined image to the particular combined image.

Optionally, when the sample moves obliquely to the focal plane of the objective, multiple combined images may be further combined. For example, since combined images represent sections of the sample during its motion, such combined images may be combined to create images with volumetric information of the sample.

However, since the sample is in relative motion with respect to the objective or the imaging system, those combined images need to be transformed before being further combined, for the same reason as recorded images need to be transformed to be combined into a combined image. Thus, such a combination includes transforming multiple combined images and subsequently further combining them.

Since the relative motion of the sample with respect to the imaging system has a preferential direction along the axis of movement, the transformation applied to an individual combined image may include a pixel-by-pixel translation along such an axis, advantageously in the direction opposite to the movement of the image of the sample on the combined image.

To compensate for the motion of the sample between combined images, each combined image should be translated by a different translation which is equal to the translation of the image of the sample from the first combined image to the combined image being transformed.

Particularly, the transformation applied to a particular one of the combined images includes a translation in substantially opposite direction and with magnitude identical or proportional to the displacement of the image of the sample from the first combined image to the particular one of the combined images.

An equivalent implementation of the above method can be to apply the translation on recorded images with respect to the first recorded image of the first combined image when generating each combined image to be further combined. Such combined images will not need to be translated before being further combined, because the translation to compensate for the motion of the sample between combined images has already been compensated when generating the transformed recorded images.

When each combined image is generated by extracting different parts of the selected recorded images, the displacement of the image of the sample between each combined image is not caused by the motion of the sample, but by the displacement between the extracted parts of the recorded images used to generate each combined image. This may be compensated for, for instance, by translating each combined image before further combining them, in which case the transformation for a particular one of the combined images may be a translation in substantially opposite direction and with magnitude identical or proportional to the displacement of the image of the sample from the first combined image to the particular one of the combined images. The magnitude may be adjusted based on the size of the extracted part of the recorded images along the direction of the movement of the sample. The magnitude may be further adjusted by a factor related to the angle between the focal plane and the plane of the view of the sample. Preferably, the step of combining the transformed combined images into a further combined image includes generating a three-dimensional image of the sample or a maximum-intensity projection of the sample.

Such transformed combined images may preferably be further combined by stacking them pixel-by-pixel. This creates a three-dimensional image of the sample volume where each transformed combined image corresponds to a section of the sample. This enables, for instance, volumetric analysis of the sample.

Such transformed combined images may preferably be further combined by taking their pixel-by-pixel maximum. This creates a maximum-intensity projection of the sample, which enables to include three-dimensional information about a sample in the same further combined image, thus reducing the size of the data to transfer or to analyse.

Preferably, at least one of a recording time and an illumination time is set such that a motion blur on the recorded images or combined images, in particular with respect to a pixel size of the combined image or to the optical resolution of an image of the sample, is below a threshold. In particular, the illumination time is the duration for which the sample is illuminated by the illumination light. The recording time is, in particular, the duration for which the image is recorded, for example by means of the detector array. The threshold may be a motion blur that is up to five times or any integer number between 1 and 5 times the pixel size of the combined image, for example.

The movement of the image of the sample will cause motion blur on recorded images. Thus, the detection time may be set such that the motion blur on the recorded images is lower than a threshold. This way, since combining images does not increase such a motion blur, the combined images also possess the same motion blur lower than the threshold.

Similarly, alternatively or additionally, the illumination system may illuminate the sample only during an illumination time, which may be set such that the motion blur on the recorded images is lower than a threshold. This way, since combining images does not increase such a motion blur, the combined images also possess the same motion blur lower than the threshold.

Preferably, such threshold is the size of the pixel of the combined image. The combined image is then blur-free. Optionally, the threshold may be up to five times or any integer number between 1 and 5 times the pixel size of the combined image. The combined image is then sufficiently blur-free for some analysis of the sample.

Preferably, the recorded images or the combined image may be transformed by pixel binning, which consists in summing (or, equivalently, averaging) groups of pixels together. Depending on the operating mode of the detector array, this transformation results in the transformed image having a higher dynamic range or signal-to-noise ratio compared to the untransformed image. Specifically, if the detector array operates such that its detection noise is negligeable relative to the detected signal in the individual recorded images, binning creates a transformed image with a higher dynamic range than the untransformed image. If the detector array operates such that its detection noise is not negligeable with respect to the detected signal in the individual recorded images, binning creates a transformed image with a higher signal-to-noise ratio than the untransformed image.

Optionally, if pixel binning is applied, the threshold is set such that the motion blur on the combined image is lower than its pixel size after binning. The combined images are then blur-free. Optionally, the threshold may be up to five times or any integer number between 1 and 5 times the pixel size resulting from the binning. The combined images are then sufficiently blur-free for some analysis of the sample.

Preferably, the threshold corresponds to the optical resolution of the combined image, in particular, the threshold may correspond to up to five times or up to any integer number between 1 and 5 times the optical resolution.

More specifically, the threshold may be the size of the Airy diameter of the point-spread-function of the imaging system, sometimes called optical resolution. The recorded images and the combined images are then essentially blur-free. Optionally, the threshold may be up to five times or any integer number between 1 and 5 times the size of the Airy diameter. The combined images are then sufficiently blur-free for some analysis of the sample.

Preferably, an axis of movement of the sample and a focal plane of an imaging system comprises an angle larger than 0 degrees, preferably larger than 5 or 10 degrees.

Preferably, an axis of movement of the sample and a focal plane of an imaging system comprises an angle smaller than 90 degrees, preferably smaller than 80 or 70 degrees.

Preferably, an amount of recorded images selected for generating a combined image is at least 5 preferably at least 10 images.

Preferably, a bit depth of the recorded images is in a range between 1 and 16 bit, more preferably in a range between 1 and 8 bit, or between 1 and 4 bit.

A large part of pixelated detectors records 16 bit images, usually at moderate frame rate. Reducing the bit depth of the recorded images usually enables recording at a higher frame rate. Thus, it may be advantageous to decrease the bit depth of the recorded images to increase the number of images recorded by the detector in a same amount of time, since having a larger number of recorded images and combining this larger number of recorded images results in combined images with a higher quality (i.e., higher dynamic range or higher signal-to-noise-ratio). Thus, it may be advantageous to generate images with lower bit depth than 3 bits, preferably lower than 2 bits.

Detector arrays which record images at very low bit depth (e.g., 1 bit) may have high sensitivity and high frame rate. Thus, they may be advantageous for increasing the number of recorded images and/or decreasing the exposure time. This thus reduces motion blur and enables higher motion speed for the sample. Many of such recorded images can be combined, resulting in combined images with a higher quality (i.e., higher dynamic range or higher signal-to-noise ratio). It may thus be advantageous to use a detector with bit depth equal to 1.

Low bit detectors benefit from combining higher number of images with speed of motion being constant over the images which are selected to generate a combined image. For example, 5 images are needed to obtain sufficient image quality with sensors of bit depth less than 3 bits, or 10 images with sensors of bit depth less than 2 bits.

Single-photon detectors (e.g., SPAD arrays) record images at high sensitivity and high frame rate. Thus, it may be advantageous to use them as the detector array.

The illumination is set to illuminate the sample. The illumination light may, for instance, excite fluorescence in the sample or be scattered by the sample before being collected by the imaging system. This enhances the contrast between the image of the sample and the image of its surrounding medium, both recorded by the detector array. This enables diverse imaging modalities such as light-sheet illumination, widefield illumination, bright-field illumination, dark-field illumination, phase-contrast illumination.

Especially, when using low dynamic range detectors, for example SPAD arrays or other sensors with one bit, since light coming from outside of the depth-of-field of an objective of the imaging system can contribute substantially to the detected signal, a method to remove this background light may be important. In such a case, combination with light-sheet illumination may be suitable for selective illumination of the focal plane of the objective and removal of background light. Thus, advantageously, the illumination system may illuminate the sample with a sheet of light.

Preferably, the sample is moved along the axis of movement substantially constantly, in particular in a uniform direction and/or with a uniform magnitude of velocity, at least during the step of generating the recorded images of the sample which are selected for generating the combined image, and whilst the sample passes through the focal plane. Preferably, the sample is not rotated whilst moving along the axis of movement. In particular, the fluidic arrangement, in particular the fluidic channel, may comprise elements that reduce a rotation of the sample whilst moving through the fluidic channel.

Optionally, the flow through the fluidic arrangement may be set to be constant during the time the detector records the recorded images of the sample which are selected for generating the combined image. This advantageously simplifies the combination of such recorded images, since the speed of the sample can be assumed to be constant. This also advantageously simplifies the computation of the motion speed, since the speed can be assumed to be constant.

Moving the sample at constant speed particularly means that the fluctuations of speed are so small that resulting blur on the combined images, in particular with respect to a pixel size of the combined image or to the optical resolution of an image of the sample, is below a threshold.

This threshold may correspond to the largest of the following: pixel size or 3- or 5-times pixel size of the combined image or 3- or 5-times optical resolution of an image of the sample, for example.

In another aspect, an imaging system, in particular an imaging flow cytometry system, is provided comprising means configured to carry out the method described above.

Preferably, the imaging system comprises a fluidic arrangement configured to move a sample along an axis of movement, for example in a liquid. The imaging system further comprises an illumination light source configured to generate illumination light and to illuminate the sample, and a detector array configured to receive detection light from the sample. The imaging system further comprises an optical arrangement configured to direct the detection light from the sample towards the detector array (and illumination light towards sample). The imaging system further comprises a control unit configured to control the imaging system, in particular to direct the elements of the system to carry out the method. The control unit may comprise an integrated circuit such as a field-programmable gate array and/or a (external) computer. A focal plane of the imaging system, in particular the optical arrangement, may be arranged such that samples moving through the fluidic arrangement may be imaged onto the detector array.

For example, the imaging system may comprise a microscope.

Preferably, the angle between a focal plane of the optical arrangement and the axis of movement is larger than 0 degrees, preferably larger than 5 or 10 degrees and/or smaller than 90 degrees, preferably smaller than 80 or 70 degrees.

Preferably, the detector array comprises single-photon sensor elements. For example, the detector array may comprise a SPAD array.

Preferably, the illumination light source and/or the optical arrangement is configured to generate the illumination light as a light sheet, in particular in the imaging space which might be formed such that it essentially overlaps with a focal plane of the optical arrangement of the imaging system. The imaging system may be a light-sheet microscope, for example.

Preferably, the fluidic arrangement comprises a fluidic channel configured to transport the sample. For example, the fluidic channel may be part of a microfluidic device of the fluidic arrangement. The sample may be transported or moved through the fluidic channel in a liquid. The fluidic channel may further have an imaging space, wherein the focal plane of the optical arrangement is arranged within the imaging space. The imaging space may be a section of the fluidic channel that enables imaging the sample as it is transported through the fluidic channel.

Optionally, the sample may flow inside the fluidic channel. This results in generation of a motion of its image on the recorded image with controlled preferential axis and controlled speed.

Preferably, the imaging space has at least one wall, in particular a wall facing an objective of the optical arrangement, made of a material with a refractive index matched with the refractive index of the liquid flowing through the fluidic channel and/or being optically transparent for at least the illumination light and/or the detection light.

In particular, when the sample flows inside a channel, the wall of the channel which faces the objective may be made of a material with a refractive index close to the one of the medium flowing in the channel. This enables to minimize the optical aberration induced by the wall on the light originating from the sample due to the refraction of light at the interface between the flowing medium and the channel wall.

Alternatively or additionally, the imaging space might have at least one wall, in particular a wall facing an objective of the optical arrangement, made of a material with a refractive index matched with the refractive index of an immersion medium arranged between the objective and the at least one wall of the imaging space. Preferably, the refractive indices of the liquid flowing through the channel, of the wall of the channel and of the immersion medium have essentially the same values.

In particular, when the sample flows inside a channel, the wall of the channel which faces the objective may be made of a material with a refractive index close to the one of the immersion medium of the objective. This enables to minimize the optical aberration induced by the wall on the light originating from the sample due to the refraction of light at the interface between the wall and the immersion medium of the objective.

The imaging system may also be realized as single objective selective plane illumination microscopy or oblique plane microscopy.

If this type of microscope is used in combination with a microfluidic channel the focal plane is tilted with respect to the flow in the channel and a standard microfluidic chip with glass or plastic bottom can be used.

The imaging system has the same advantages as the method. Further, the imaging system may be supplemented with the features of the method described in this document, in particular, the features of the dependent claims of the method.

Preferably, the sample flows inside a fluidic channel with a cross-section such that all the light originating from the sample and collected by the imaging system does not encounter one or more side walls of the channel along its path. This prevents such a wall from distorting such light before being collected by the imaging system independently of the location of the sample within the cross-section of the channel. An example of suitable cross-section shape is an isosceles triangle with its apex angle larger than or equal to the collection angle of the imaging system. Another example of suitable cross-section shape is an isosceles trapeze with its apex angle larger than or equal to the collection angle of the imaging system. Particularly, a suitable cross-section shape has the following property: at any point of its boundary where the refractive index is not matched with the flowing medium and with the immersion medium, the angle between the cross-section boundary and the optical axis of the imaging system is larger than or equal to the collection angle of the imaging system, in particular of the numerical aperture of the optical arrangement or objective. The channel has then to be positioned such that its cross-section is essentially parallel to the optical axis of the imaging system. If the cross-section of the channel is tilted relative to the optical axis of the imaging system by a tilting angle, which might correspond to the angle between the axis of movement of the sample and the focal plane of the imaging system, the cross-section angles described above must be multiplied by a factor related to the tilting angle. It is understood that the cross-section of the channel is intended as the section of the channel perpendicular to the flow direction.

Some or all of the control unit may be embedded in or closely connected to the detector array. For instance, the transformations and combinations of the recorded images may be implemented on a field-programmable gate array which receives the images directly from the detector array, and outputs the combined images. This enables very fast operation and reduction of the amount of data which needs to be transferred for further processing or for analysis of the sample. Optionally, the estimation of the coefficient of proportionality S may also be implemented the same way. Optionally, further processing of the combined images (i.e., feature extraction, classification, quantification, segmentation) may also be implemented the same way. All or part of the processing may be run on a field-programmable gate array. Alternatively, all or part of the processing may be run on a CPU and/or GPU in a computer after transferring of the required data.

### Brief Description of the Figures

Hereinafter, specific embodiments are described referring to the drawings, wherein:
- Fig. 1: is a schematic view of an imaging system according to a first embodiment,
- Fig. 2: is a schematic view of an imaging system according to a second embodiment,
- Fig. 3: is a diagram of a method for imaging flow cytometry according to a first embodiment,
- Fig. 4: is a diagram of a method for imaging flow cytometry according to a second embodiment,
- Fig. 5: is an illustration of the relationships of terms involved in a translation of a method for imaging flow cytometry,
- Fig. 6: is a diagram of a method for imaging flow cytometry according to a third embodiment,
- Fig. 7: is a diagram of a method for imaging flow cytometry according to a fourth embodiment, and
- Fig. 8: is a diagram of a method for estimating the speed of movement for imaging flow cytometry.

### Detailed Description

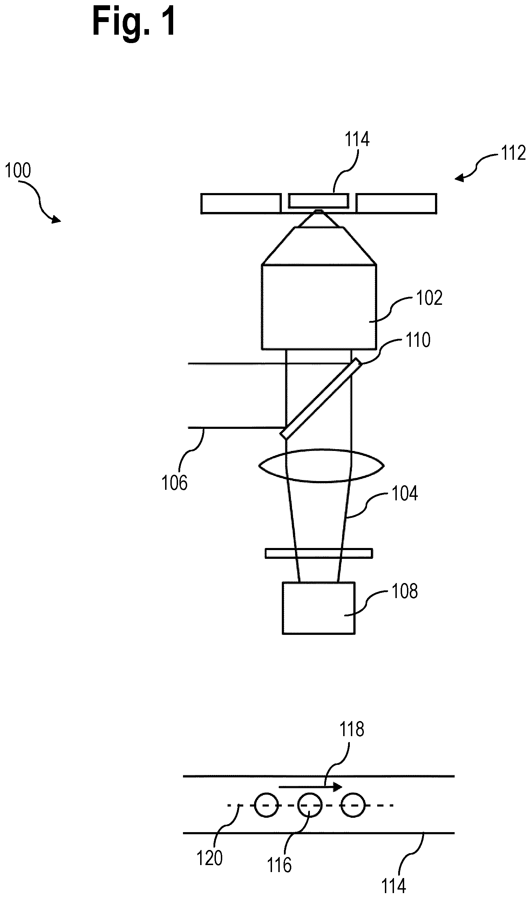

Figure 1 is a schematic view of an embodiment of an imaging system 100. It comprises an optical arrangement with an objective 102 arranged to receive detection light 104, an illumination light source (not shown) configured to generate illumination light 106, and a detector array 108, for example, a SPAD array.

The optical arrangement may further comprise a dichroic mirror 110 configured to reflect the illumination light 106 towards the objective 102 and allow transmission of the detection light 104 towards the detector 108. Between the dichroic mirror 110 and the detector 108 there is arranged a tube lens and a filter which might to filter out undesired light from the detection light 104.

The imaging system 100 may further comprise a fluidic arrangement with a fluidic chip 112 with a fluidic channel 114 where a sample 116 under investigation moves along an axis of movement 118. In this embodiment, the axis of movement 118 of the sample 116 is substantially parallel to the focal plane 120 of the objective 102. A longitudinal axis of the fluidic channel 114 is substantially parallel to the axis of movement 118 of the sample 116. As the sample 116 is moved through the fluidic channel 114, the section of the sample 116 that is in the focal plane 120 of the objective 102 may be imaged repeatedly by means of the imaging system 100.

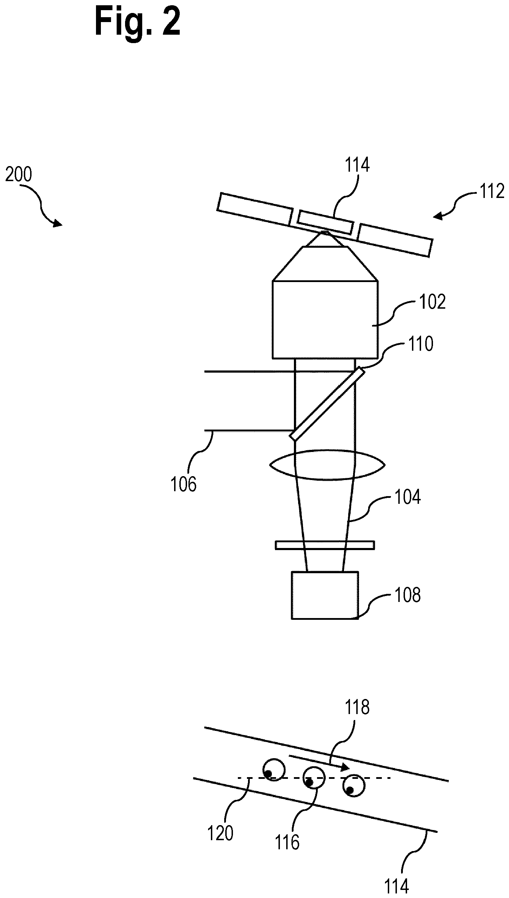

Figure 2 is a schematic view of an imaging system 200. In contrast to the imaging system 100, the focal plane 120 of the imaging system 200 is at an oblique angle to the axis of movement 118 of the sample 116 in the fluidic channel 114. As the sample 116 is moved through the fluidic channel 114, the sections of the sample 116 that are in the focal plane 120 may be imaged subsequently by means of the imaging system 200.

The imaging systems 100, 200, in particular the respective fluidic arrangements, may comprise means to move the liquid in the fluidic channel 114 in order to move the sample 116 through the channel 114. For example, the imaging systems 100, 200 may comprise a pump configured to transport the liquid through the fluidic channel 114 and thereby move the sample 116 through the channel 114. By regulating the power output of the pump, the speed of the liquid flowing through the fluidic channel 114 may be determined and therefore the speed of the sample 116 through the fluidic channel 114. By flowing a plurality of samples 116 through the fluidic channel 114, each of the plurality of samples 116 may be imaged sequentially.

The imaging systems 100, 200 may generate images of the sample 116 by illuminating the sample 116 with illumination light 106 as it is moved through the focal plane 120. Respective detection light 104 originating from the sample 116, in particular from the focal plane 120, is imaged or projected onto the detector array 108.

The imaging systems 100, 200 may further comprise a respective control unit (not shown) configured to control the imaging system 100, 200.

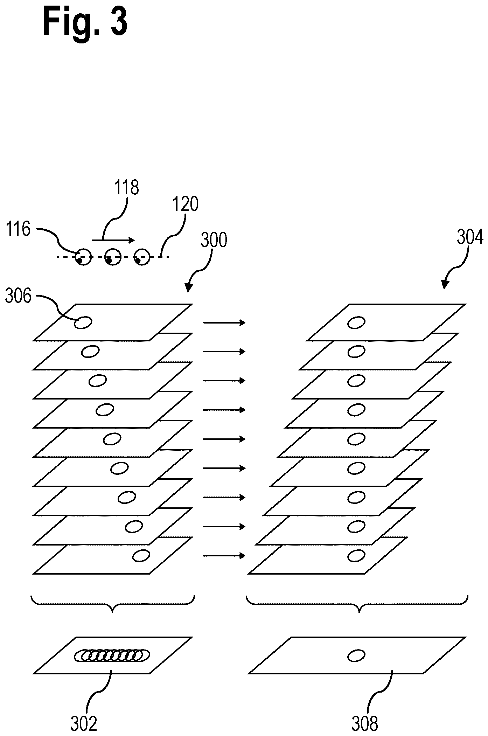

Figure 3 is a diagram of a method for imaging flow cytometry, in particular using the imaging system 100.

The method starts with generating a plurality of recorded images 300 of the sample 116, for example by means of the imaging system 100. The recorded images 300 are images of one section of the sample 116, since the axis of movement 118 is substantially parallel to the focal plane 120. Were the recorded images combined without applying any transformation to them, the resulting image 302 would display significant motion blur.

Instead, in a subsequent step of the method, at least some of the recorded images 300 are selected and a transformation is applied to each of the selected recorded images in order to generate transformed selected images 304. In the flow diagram of Fig. 3 all recorded images 300 are selected. The transformation for a particular one of the selected recorded images preferably includes a translation opposite to the displacement of the image 306 of the sample from the first one of the recorded images 300 to the particular one of the selected recorded images. This results in the transformed selected images 304 being aligned with respect to the sample 116.

In a subsequent step of the method, the transformed selected images 304 are combined in order to generate a combined image 308 of the sample 116. The combined image 308 does not display motion blur, due to the images 306 of the sample 116 being aligned with each other in the combined image 308.

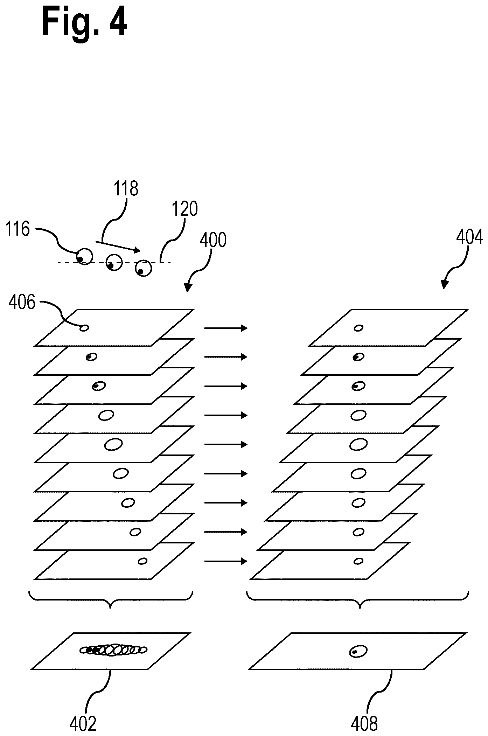

Figure 4 is a diagram of a method for imaging flow cytometry, in particular using the imaging system 200.

The method starts with generating a plurality of recorded images 400 of the sample 116, for example by means of the imaging system 200. The recorded images 400 are images of a plurality of sections of the sample 116 as the entire sample 116 moves through the focal plane 120, due to the axis of movement 118 being at an oblique angle to the focal plane 120. Were the recorded images combined without applying any transformation to them, the resulting image 402 would display significant motion blur.

Instead, in a subsequent step of the method, the at least some of the recorded images 400 are selected and a transformation is applied to each of the selected recorded images in order to generate transformed selected images 404. In the diagram of Fig. 4 all recorded images 400 are selected. The transformation for a particular one of the selected recorded images preferably includes a translation opposite to the displacement of the image 406 of the sample from the first one of the recorded images 400 to the particular one of the selected recorded images. This results in the transformed selected images 404 being aligned with respect to the sample 116.

In a subsequent step of the method, the transformed selected images 404 are combined in order to generate a combined image 408 of the sample 116. The combined image 408 does not display motion blur, due to the images 406 of the sample 116 being aligned with each other in the combined image 408.

The transformation applied to the recorded images 300, 400 to generate the transformed selected images 304, 404, may include a translation to compensate for the velocity v of the movement of the sample 116 along the axis 118 over a timespan Δ*t.*

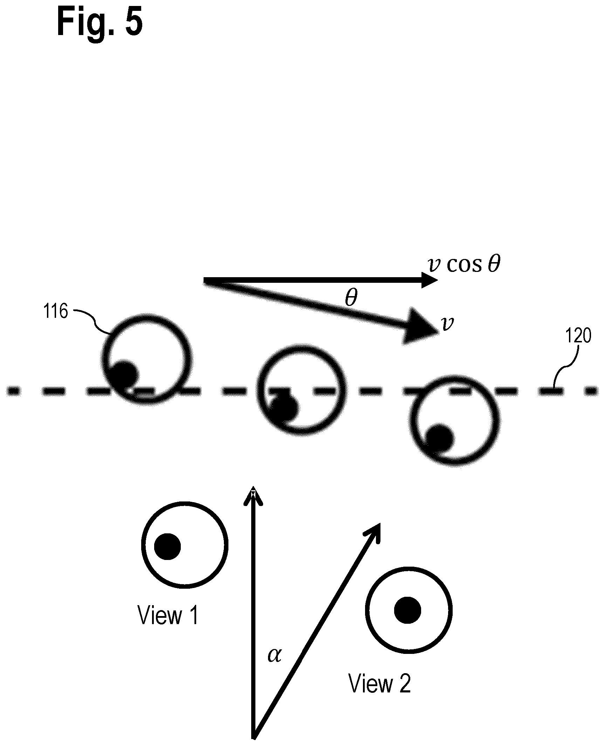

Figure 5 is an illustration of the relationships of the terms involved in the translation. For view 1, the translation to compensate for the velocity *v* over a timespan Δ*t* is: *v* cos *θ* Δt*.* For view 2, the translation to compensate for the velocity *v* over a timespan Δ*t* is: *v* cos(*θ* - *α*) Δ*t. θ* is the angle between the axis of movement of the sample and the focal plane of the imaging system. *α* is the angle between the optical axis of the imaging system and the direction of view 2.

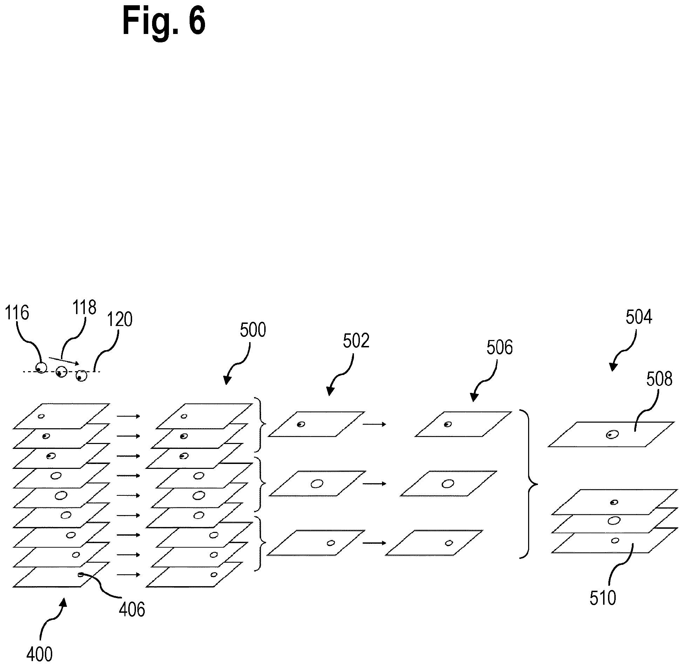

Figure 6 is a diagram of a method for imaging flow cytometry, in particular using the imaging system 200.

Initially, the plurality of recorded images 400 are generated. The recorded images 400 are generated by means of the imaging system 200 with the axis of movement 118 being at an oblique angle to the focal plane 120. The recorded images 400 are subsequently transformed. In contrast to the method according to Fig. 4, three subsets of three of the plurality of recorded images 400 are selected and transformed such that the images 406 of the sample 116 are aligned with each other for each of the subsets. This results in three subsets of transformed selected images 500. Each of the subsets may be combined to generate a respective combined image 502. The transformation as described for Fig. 5 may be applied to the recorded images 400, for example.

In a further step, further combined images 504 may be generated by transforming the combined images 502 similarly to the recorded images 400 in order to generate transformed combined images 506. The transformed combined images 506 may then be combined to generate, for example, a maximum-intensity projection 508 of the sample 116 under investigation or a stack 510 of transformed combined images 506 representing a three-dimensional image of the sample 116 under investigation.

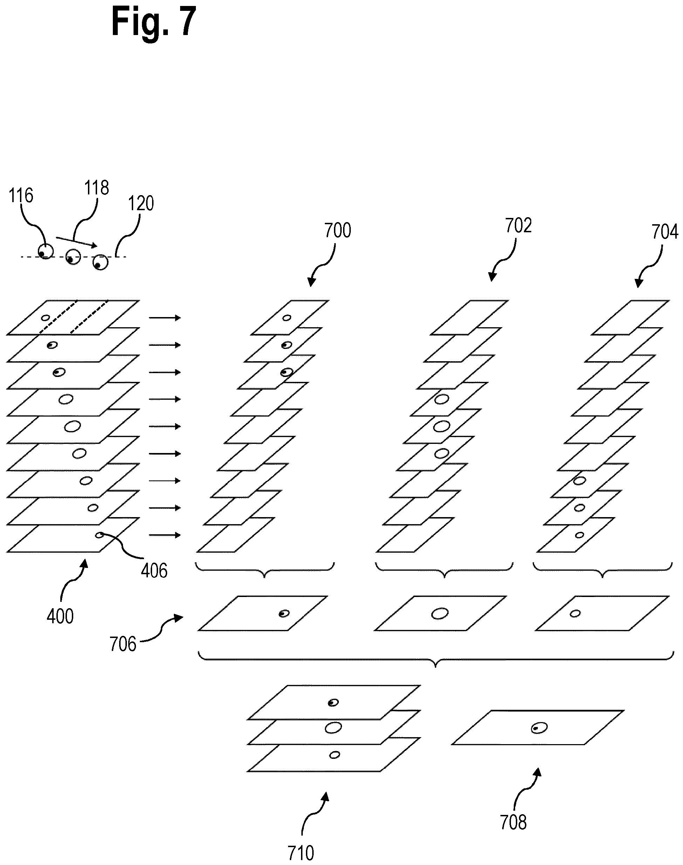

Figure 7 is a diagram of a method for imaging flow cytometry, in particular using the imaging system 200. In contrast to the method according to Fig. 6, the method according to Fig. 7 extracts parts 700, 702, 704 of selected recorded images 400. The parts 700, 702, 704 may be transformed by applying a translation, as described above, in particular for Fig. 5, and combined to generate respective combined images 706 from the respective parts 702, 704, 706. The combined images 706 may be transformed and combined into further combined images such as a maximum-intensity projection 708 of the sample 116 under investigation or a stack 710 of transformed combined images 706 representing a three-dimensional image.

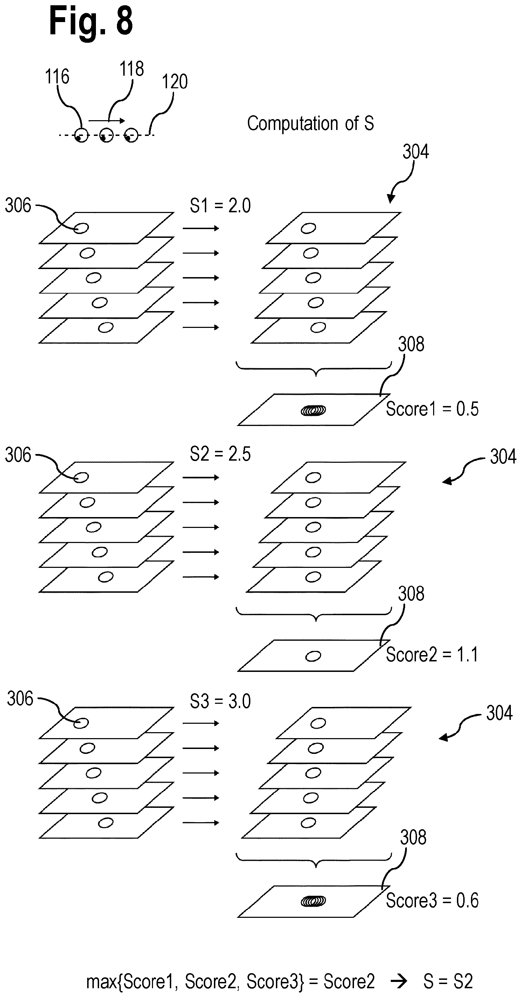

Figure 8 is a diagram of a method for estimating the speed of movement of a sample for imaging flow cytometry, in particular using the imaging system 100. In this example, three different estimates of the coefficient of proportionality S are considered, i.e. S1 = 2.0, S2 = 2.5 and S3 = 3.0. A score may be computed for each estimate. In the example of Fig. 8, the computed scores are Score1 = 0.5, Score2 = 1.1 and Score3 = 0.6. In this example, the score is the sharpness of the combined image 308 and is generated by using the estimate of the coefficient of proportionality S to generate the transformed recorded images 304. In this example, the coefficient of proportionality S is determined to be S2 due to the estimate with the highest score being Score2.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100, 200: Imaging system
- 102: Objective
- 104: Detection light
- 106: Illumination light
- 108: Detector array
- 110: Dichroic mirror
- 112: Fluidic chip
- 114: Fluidic channel
- 116: Sample
- 118: Axis of movement
- 120: Focal plane
- 300, 400: Recorded images
- 302, 402: Image with motion blur
- 304, 404, 500: Transformed selected images
- 306, 406: Image of sample
- 308, 408, 502, 706: Combined image
- 504: Further combined image
- 506: Transformed combined images
- 508, 708: Maximum intensity projection
- 510, 710: Stack of combined images
- 700, 702, 704: Extracted parts of recorded images

## Claims

1. A method for imaging flow cytometry comprising:
- moving a sample (116) along an axis of movement (118),
- generating recorded images (300, 400) of the sample (116), wherein each recorded image (300, 400) is generated by:
- illuminating the sample (116) by illumination light (106),
- forming an image of the sample (116) by collecting detection light (104) originating from or interacting with the sample (116), and
- generating a recorded image (300, 400) of the sample by recording the image of the sample (116) during its movement;
- generating a combined image (308, 408, 502, 706) of the sample (116) by:
- selecting at least two recorded images (300, 400),
- generating a transformed recorded image (304, 404, 500) for each selected recorded image by:
- extracting at least part (700, 702, 704) of the selected recorded image, and
- applying a transformation to the extracted part (700, 702, 704);
- combining the transformed recorded images into a combined image (308, 408, 502, 706).

2. The method according to claim 1, wherein moving the sample (116) along an axis of movement (118) causes a movement of the image of the sample (116) along the image of the axis of movement (118) of the sample (116), and wherein the transformation applied to the extracted part (700, 702, 704) includes a translation along the image of the axis of movement (118) of the sample (116).

3. The method according to any one of the preceding claims, wherein the transformation applied to the extracted part (700, 702, 704) of a particular one of the selected recorded images includes a translation in substantially opposite direction and with a magnitude identical or proportional to the displacement of the image of the sample (116) from a first selected recorded image to the particular one of the selected recorded images.

4. The method according to any one of the preceding claims, wherein combining the transformed recorded images (304, 404, 500) includes generating a weighted sum of the transformed recorded images.

5. The method according to any one of the preceding claims, wherein at least three recorded images are selected, and wherein the transformation applied to the extracted part of a particular one of the selected recorded images includes a translation with a magnitude substantially proportional, with a coefficient of proportionality S, to the time elapsed between generation of the first selected recorded image and generation of the particular one of the selected recorded images.

6. The method according to claim 5, wherein the coefficient of proportionality S is computed by:
- generating at least two estimates of the coefficient of proportionality S,
- computing a score for each estimate by:
- selecting at least two recorded images (300, 400);
- generating a transformed recorded image (304, 404, 500) for each selected recorded image by:
- extracting at least a part of a particular one of the selected recorded images,
- applying a transformation to the extracted part, wherein the transformation includes a translation with magnitude substantially proportional, with coefficient of proportionality equal to the estimate, to the time elapsed between generation of the first selected recorded image and generation of the particular one of the selected recorded images;
- computing the score based on a property of the transformed recorded images;
- computing the coefficient of proportionality S based on the scores of the estimates.

7. The method according to claim 6, wherein the step of computing the coefficient of proportionality S includes generating a weighted average of the estimates of the coefficient of proportionality S, wherein the weighing of each estimate is based on the scores, and/or wherein the step of computing the coefficient of proportionality S includes fitting a function to the values of the scores and the values of the estimates.

8. The method according to any one of the preceding claims, wherein the step of generating a combined image (308, 408, 502, 706) of the sample (116) is executed at least twice, wherein each combined image (308, 408, 502, 706) is generated by extracting different parts of the selected recorded images (300, 400).

9. The method according to any one of the preceding claims, wherein the step of generating a combined image (308, 408, 502, 706) of the sample (116) is executed at least twice, wherein each combined image (308, 408, 502, 706) is generated by selecting a different set of recorded images (300, 400).

10. The method according to any one of claims 8 and 9, comprising a step of further combining combined images (308, 408, 502, 706) into a further combined image (504) by:
- generating a transformed combined image (506) for each combined image by applying a transformation to each combined image;
- combining the transformed combined images (506) into a further combined image (504).

11. The method according to claim 10, wherein the step of combining the transformed combined images (506) into a further combined image (504) includes generating a three-dimensional image (510, 710) of the sample or a maximum-intensity projection (508, 708) of the sample.

12. The method according to any one of the preceding claims, wherein at least one of a recording time and an illumination time is set such that a motion blur on the recorded images (300, 400) or combined images (308, 408, 502, 706), in particular with respect to a pixel size of the combined image or to the optical resolution of an image of the sample (116), is below a threshold.

13. The method according to claim 12, wherein the threshold corresponds to the largest of the following: pixel size, or 3- or 5-times pixel size of the combined image (308, 408, 502, 706) or 3- or 5-times optical resolution of an image of the sample (116).

14. The method according to any one of the preceding claims, wherein the axis of movement of the sample and a focal plane of an imaging system comprises an angle larger than 0 degrees, preferably larger than 5 or 10 degrees and/or smaller than 90 degrees, preferably smaller than 80 or 70 degrees.

15. The method according to any one of the preceding claims, wherein a number of recorded images selected for generating a combined image is at least 5 images, preferably at least 10, and/or wherein a bit depth of the recorded images is lower than 3 bits, preferably lower than 2 bits.

16. The method of any of the preceding claims wherein the sample is moved along the axis of movement (118) substantially at a constant speed at least during the step of generating the recorded images (300, 400) of the sample (116), which are selected for generating the combined image.

17. An imaging system (100, 200), in particular a microscope system, comprising means configured to carry out the method according to any one of the preceding claims.

18. The imaging system according to claim 17, comprising a fluidic arrangement configured to move a sample (116) along an axis of movement (118), an illumination light source configured to generate illumination light (106), a detector array (108) configured to receive detection light (104), an optical arrangement configured to direct the detection light (104) from the sample (116) towards the detector array (108), and a control unit configured to control the imaging system (100, 200).

19. The imaging system according to claim 18, wherein an angle between a focal plane (120) of the optical arrangement and the axis of movement (118) is larger than 0 degrees, preferably larger than 5 or 10 degrees and/or smaller than 90 degrees, preferably smaller than 80 or 70 degrees.

20. The imaging system according to any one of claims 18 to 19, wherein the detector array (108) comprises single-photon sensor elements and/or SPAD array.

21. The imaging system according to any one of the claims 18 to 20 wherein the illumination light is shaped as a light sheet.

22. The imaging system according to any one of the claims 18 to 21 wherein the fluidic arrangement comprises a fluidic channel (114) configured to transport the sample (116).
